# EUROPEAN PATENT APPLICATION

(11) **EP 3 216 948 A1**
(43) Date of publication of application: **13.09.2017**
(21) Application number: 17000162.2
(22) Date of filing: 02.02.2017
(51) Int. Cl.: E04H 12/10, F03D 13/20

(54) **REINFORCED WIND TOWER**

(30) Priority: 18.02.2016 ES 201600131
(71) Applicant: Gamesa Innovation & Technology, S.L., 31621 Sarriguren (ES)
(72) Inventor: Unanua Hermoso De Mendoza, Pablo, 31621 Sarriguren (Navarra) (ES)

(57) **Abstract**

Reinforced wind turbine tower (1) formed by a hollow body (2), which comprises in its interior at least one reinforcement structure (3) formed by a series of longitudinal reinforcements (4), where each of said reinforcements (4) has its two opposite ends attached by attachment means to the hollow body inner surface (2) of the tower at points placed on different vertical lines, and where each reinforcement (4) has at least one of its ends attached by attachment means to the end of the other consecutive reinforcement (4) with the same.

## Description

### Technical field of the invention

The present invention belongs to the technical field of wind turbine towers, which are formed by a very high hollow body subjected to a number of loads.

### Background of the invention

Currently with the increased generation of clean, environmentally-friendly power, wind power has been growing development, generating an increased number of wind turbines to obtain wind power which generally comprises a turbine, a high tower and a generator.

The tower can be made of reinforced concrete or metal, and the construction and problematic thereof is similar to other high towers, such as broadcasting towers, mobile communications towers or electricity towers, although the specification focuses on wind turbine towers it is not limited to these.

Metal towers are formed by superposing metal rings or hoops welded to each other such that they form segments of the tower, or by joining together, usually by crewing together, metal panels that are joined horizontal and vertically.

The tower is meant to transmit the gravitational loads and lateral stresses of the turbine to the bottom support.

Both embodiments have drawbacks that generate construction problems of these towers and greatly increase the cost thereof.

One of these drawbacks is the dimensional limitations imposed by road transport the tower segments, given that although if the tower is divided into segments to facilitate transportation, the diameter of the bottom segments generally exceeds the allowed limits.

As the bottom segments support the highest loads, their diameter must be increased. The higher the tower, the greater is the size required for the bottom segments.

An additional drawback is that to withstand the high loads to which the tower is subjected, the hoops or plates forming the segments must have a considerable thickness, which implies high costs for materials.

In addition, depending on the tower height and loads that they must withstand, some towers cannot be designed due to the aforementioned transport constraints

One solution sometimes adopted in these cases is construction of a first segment of reinforced concrete which rises vertically from the foundations. Thus, the higher loads require a greater height of these segments is required, although as the height of this segment increases also increases the total cost of the tower.

As an example of the state of the art the reference document ES2330482 can be mentioned, which defines a wind turbine tower comprising several segments with a polygonal cross section. Each segment comprises several flat plates connected to each other to form the polygonal cross section, where said flat plates are connected together by linking plates.

With this tower the problem of road transport limitations is solved, as each segment of the tower is divided into a number of plates which, being smaller, meet the constraints mentioned.

However, although with this solution the drawback of road transport restrictions is solved, the laborious assembly of the tower, part by part, as well as the increased assembly time required, result in an important production cost.

In addition, this solution does not add stiffness to the tower, so that at greater heights and loads a high plate thickness is still required, which significantly increases the tower final price.

### DESCRIPTION OF THE INVENTION

The reinforced wind turbine tower formed by a hollow body disclosed herein comprises in its interior at least one reinforcement structure formed by a series of longitudinal reinforcement elements, where each of said longitudinal reinforcement elements has its two opposite ends attached by attachment means to the inner surface of the tower hollow body at points in different vertical lines, and where each longitudinal element has at least one of its ends attached by attachment means to the end of other longitudinal element consecutive to it.

According to a preferred embodiment, the wind turbine tower comprises in its interior at least two vertical reinforcement structures, each one formed by a series of reinforcements with a longitudinal shape and attached to each other consecutively at their ends, where each vertical reinforcement structure is attached to the hollow body inner surface.

In this case, in a preferred embodiment, the vertical reinforcement structures have a varying thickness, decreasing linearly from a maximum thickness of the reinforcement with a longitudinal shape located at the lowest level to a minimum thickness value of the reinforcement with a longitudinal shape at the highest level.

According to another aspect, in a preferred embodiment the attachment means of each end of the longitudinal reinforcement element is formed by direct welding thereof on the hollow body inner surface.

In another preferred embodiment, the attachment means of each end of the longitudinal elements is formed by welding or screwing each end to an attachment element, where said attachment element is attached to the hollow body inner surface by attachment means.

In a preferred embodiment, said attachment element of the ends of the longitudinal elements is formed by vertical reinforcement structures, different for each of the ends of a same longitudinal element.

According to another preferred embodiment, the attachment element of the ends of the longitudinal elements is formed by a lug.

In any of these two cases and according to a preferred embodiment, the attachment means of attachment elements to the hollow body inner surface are formed by welding.

According to another preferred embodiment, the attachment means of the longitudinal elements to a lug are formed by welding or screwing

According to another aspect, in a preferred embodiment, the attachment means of consecutive ends of the longitudinal elements are formed by welding the same.

According to another preferred embodiment, the attachment means of consecutive ends of the longitudinal elements are formed by screwing the same.

According to a preferred embodiment, the longitudinal reinforcement elements and the reinforcement elements of longitudinal shape of vertical structures are formed by metal profiles.

With the reinforced wind tower disclosed herein, a significant improvement over the prior art is obtained.

This is because the presence of the inner reinforcements described, allows designing very high towers with smaller diameters than at present, specifically smaller than limit value set for road transport. This reduces costs and assembly times.

In addition, a wind turbine with this design allows selecting the natural frequency of the tower with and without the rotor and nacelle on a wide range. This allows selecting the frequency that optimises the fatigue loads and extreme loading of the tower, as there is a direct relationship between the natural frequency of the tower and the generated loads.

The inner structure adds a high stiffness to the wind turbine tower and absorbs a great part of the stress on the outer hollow body. This generates improved fatigue resistance, and a reduction of the tensions on the structure formed by said hollow body, thereby allowing a thinner plates or rings that form said hollow body or reducing the diameter until meeting with road transport limits.
Moreover, depending on the each tower specific needs, it can design the inner structure so as not interfere with the tower internal elements, such as a elevator, a staircase, cables, etc. or design it such that greater importance is given to obtaining a specific natural frequency, a lower manufacturing cost.

It is therefore a reinforced wind turbine tower solving existing at present in this type of towers in a simple and effective manner.

### Brief description of the drawings

To aid a better understanding of the characteristics of the invention according to a preferred example of a practical embodiment thereof, a set of drawings are provided as part of this description where, with sense illustrative and non-limiting, the following is shown:
Figure 1 shows a perspective schematic view of the interior of the reinforced wind turbine tower where the attachment element are vertical reinforcement structures.
Figure 2 shows a perspective schematic view of the interior of the reinforced wind turbine tower where the attachment element of the ends of the longitudinal elements is formed by a lug

### Detailed description of a preferred embodiment of the invention

In view of the accompanying figures, it can be seen that in a first preferred embodiment of the invention, the reinforced wind turbine 1 formed by a hollow body 2 presented herein comprises internally two reinforcement structures 3, each formed by a series of longitudinal reinforcements 4.

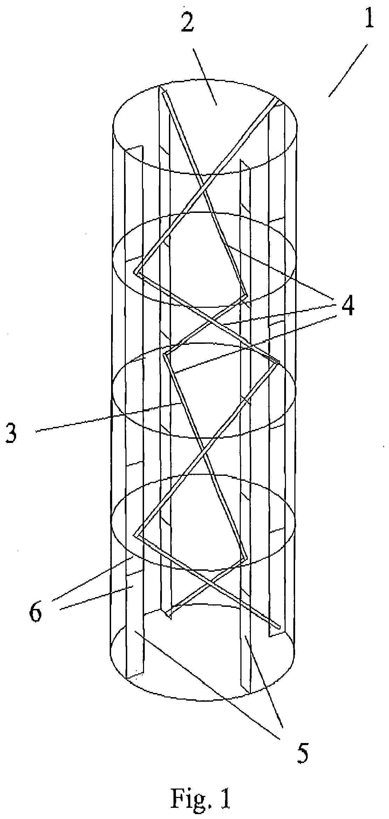

As shown in Figure 1, each of said longitudinal reinforcement elements 4 has its two opposite ends attached by attachment means to the hollow body inner surface 2 of the tower 1 at points located on different vertical lines. In addition, each longitudinal reinforcement element 4 has at least one of its ends attached by attachment means to the end of other longitudinal element consecutive to it.

In this first preferred embodiment of the invention, as shown in Figure 1, the wind turbine 1 comprises internally four vertical reinforcement structures 5 attached to the hollow body inner surface 2. Each vertical reinforcement structure 5 is formed by a series of reinforcements 6 that have a longitudinal shape, These reinforcements 6 with longitudinal shape are attached to each other consecutively at their ends.

In this first preferred embodiment, the vertical reinforcements structures 5 are arranged on diametrically opposite generating lines two to two, the diameters whose ends pass by said generating lines being perpendicular to each other.

Additionally, said vertical reinforcement structures 5 have a varying thickness, decreasing linearly from a maximum thickness of the reinforcement that have a longitudinal shape 6 located at the lowest level to a minimum thickness value of the reinforcement that have a longitudinal shape 6 at the highest level.

In this first preferred embodiment of the invention, the attachment means of each end of the longitudinal reinforcement elements 4 are formed by welding or screwing each end to an attachment element 5 or 7, where said attachment element 5 or 7 is attached to the hollow body inner surface 2 by attachment means.

As shown in Figure 1, in this first preferred embodiment of the invention said attachment element of the ends of the longitudinal elements 4 is formed by one of the four vertical reinforcement structures 5, different for each of the ends of a same longitudinal reinforcement element 4.

In addition, the attachment means of said vertical reinforcement structures 5 are formed by welding the same to the hollow body inner surface 2.

In this preferred embodiment of the invention, the attachment means of consecutive ends of the longitudinal elements 4 are formed by welding the same.

Both the longitudinal reinforcement elements 4 and the reinforcements 6 that have longitudinal shape are formed by metal profiles in this first preferred embodiment of the invention.

In this specification a second preferred embodiment of the invention is proposed which, as in the first embodiment, presents two reinforcement structures 3 formed by longitudinal reinforcement elements 4 the ends of which are attached to the hollow body inner surface 2, where at least one of the ends of each longitudinal reinforcement element 4 is attached to the end of another longitudinal reinforcement element 4 consecutive to the same.

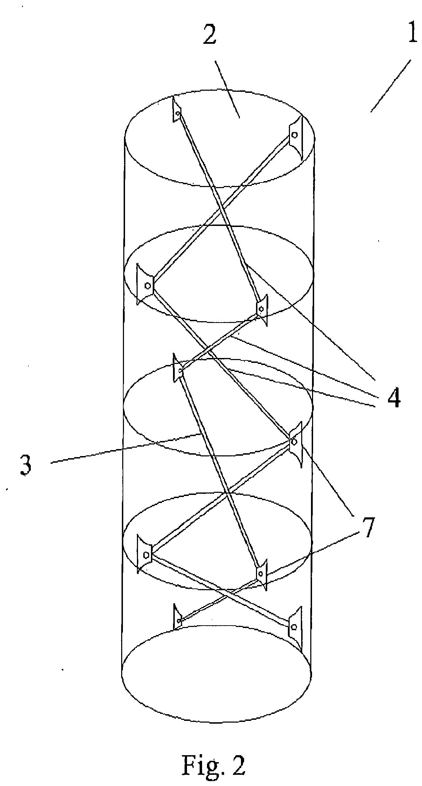

As shown in Figure 2, this second preferred embodiment, unlike the first one, there are no vertical reinforcement structures 5 inside the wind turbine tower 1 and the attachment means of each end of the longitudinal reinforcement element 4 is formed by screwing each end to an attachment element in this case formed by lugs 7 attached to the hollow body inner surface 2 attachment means.

In this second preferred embodiment of the invention, said attachment means of the lugs 7 to the hollow body inner surface 2 are formed by welding.

As in the first embodiment proposed, the elements 4 and 6 are formed by metal profiles and the joining means of the consecutive ends of the longitudinal reinforcement elements are formed by welding thereof.

The described embodiments are merely examples of the present invention, as such, the specific details, terms and phrases used in this specification must not be understood as limiting the invention but must be understood as a basis for the claims and as a representative basis for understanding the description, as well as supplying sufficient information to a person skilled in the art allowing to apply the present invention.

With the reinforced wind turbine tower presented herein provides significant improvements are achieved over the prior art.

Thus a wind turbine tower with a high stiffness is obtained and improves fatigue resistance, allowing a thinner plates or rings forming the hollow body or a smaller diameter such that road transport constraints can be complied with.

It is thereby possible to build very high wind turbine towers with smaller diameter and thinner plates, which results in a significant reduction in the cost thereof, as well as the aforementioned advantage of compliance with legal limits for road transport.

It is a highly effective wind turbine tower which, in a simple manner, allows increasing the stiffness, reducing costs and allowing greater heights thereof, solving the drawbacks that these involve for this towers type today.

## Claims

1. Reinforced wind turbine tower (1) formed by a hollow body (2), **characterised in that** it comprises in its interior at least one reinforcement structure (3) formed by a series of longitudinal reinforcement elements (4), where each of said longitudinal reinforcement elements (4) has its two opposite ends attached by attachment means to the hollow body inner surface (2) of the tower at points placed on different vertical lines, and where each longitudinal reinforcement element (4) has at least one of its ends attached by attachment means to the end of the other consecutive longitudinal reinforcement element (4) with the same.

2. Reinforced wind turbine tower (1) according to claim 1, **characterised in that** the attachment means of consecutive ends of the longitudinal reinforcement elements (4) are formed by welding or by screwing thereof.

3. Reinforced wind turbine tower (1) according to claim 1, **characterised in that** the attachment means of each end of the longitudinal reinforcement elements (4) are formed by welding or screwing each end to an attachment element (5 and 7), where said attachment element (5 and 7) is attached to the hollow body inner surface (2) by attachment means.

4. Reinforced wind turbine tower (1) according to claim 3, **characterised In that** the attachment means of the attachment element (5 and 7) to the hollow body inner surface (2) are formed by welding.

5. Reinforced wind turbine tower (1) according to claim 1, **characterised in that** the attachment means of each end of the longitudinal reinforcement elements (4) are formed by direct welding thereof on the hollow body inner surface (2).

6. Reinforced wind turbine tower (1) according to claim 3, **characterised in that** the attachment element of the ends of the longitudinal reinforcement elements (4) is formed by a vertical reinforcement structure (5) different for each of the ends of a same longitudinal reinforcement element (4).

7. Reinforced wind turbine tower (1) according to claim 6, **characterised in that** the vertical reinforcement structure (5) each one formed by a series of reinforcements with a longitudinal shape (6) and attached to each other consecutively at their ends.

8. Reinforced wind turbine tower (1) according to claim 6, **characterised in that** the vertical reinforcement structures (5) have a varying thickness, decreasing linearly from a maximum thickness of the reinforcement with a longitudinal shape (6)) located at the lowest level to a minimum thickness value of the reinforcement with a longitudinal shape (6) at the highest level.

9. Reinforced wind turbine tower (1) according to claim 3, **characterised in that** the attachment element of the ends of the longitudinal reinforcement element (4) is formed by a lug (7).

10. Reinforced wind turbine tower (1) according to any of the preceding claims, **characterised in that** the longitudinal reinforcement element (4) and the reinforcements with a longitudinal shape (6) of vertical reinforcement structures (5) are formed by metal profiles.
